# EUROPEAN PATENT SPECIFICATION

(11) **EP 3 141 469 B1**
(45) Date of publication and mention of the grant of the patent: **02.05.2018**
(21) Application number: 16184834.6
(22) Date of filing: 19.08.2016
(51) Int. Cl.: B62K 21/18, B62J 17/00

(54) **STEERING STRUCTURE FOR SADDLE RIDING TYPE VEHICLE**
LENKSTRUKTUR EINES SATTELFAHRZEUGS
STRUCTURE DE COMMANDE POUR VÉHICULE AVEC SELLE

(30) Priority: 11.09.2015 JP 2015179674
(43) Date of publication of application: 15.03.2017
(73) Proprietor: Honda Motor Co., Ltd., Minato-ku Tokyo 107-8556 (JP)
(72) Inventor: Ueno, Hirotsugu, Saitama, 351-0193 (JP); Carbonara, Maurizio, 00143 Rome (IT); Miyagawa, Shinobu, Saitama, 351-0193 (JP)
(74) Representative: Beder, Jens

(56) References cited:
- EP-A1- 2 712 793
- EP-A1- 2 982 590
- DE-U1- 9 204 600

## Description

The present invention relates to a steering structure for a saddle riding type vehicle.

As a conventional technology, a steering structure for a saddle riding type vehicle is known in which so-called separate handlebars whose left and right portions are provided as portions separate from each other are fixed to upper ends of a left front fork member and a right front fork member, respectively (see for example Japanese Patent Laid-Open No. 2010-36617). Because the left and right portions of the separate handlebars are separate from each other, the separate handlebars are high in cost and low in versatility, but have an advantage in that a space formed between fixed portions of the left and right separate handlebars can be used effectively as a space for arrangement of parts or the like.

Besides, EP2982590A1 discloses a steering structure for a saddle riding type vehicle according to the preamble of claim 1. Further, EP2712793A1 discloses another type of steering structure for a saddle riding type vehicle. Both documents belong to the state of the art according to Article 54(3) EPC. Document DE9204600U1 shows another steering structure and is considered to be the closest prior art.

There is a steering structure for a saddle riding type vehicle which steering structure has a bar handle constituted of a single piece of pipe material having a left portion and a right portion continuous with each other and extending in a vehicle width direction. The bar handle is generally lower in cost and higher in versatility than the separate handlebars, but has a problem in that it is difficult to make effective use of a space between the left and right end portions of the bar handle because the bar handle is continuous horizontally and extends in the vehicle width direction.

The present invention has been made in view of the above-described circumstances. It is accordingly an object of the present invention to make it possible to, while using a bar handle, make effective use of a space between the left and right end portions of the bar handle in a steering structure for a saddle riding type vehicle.

In order to achieve the above object, according to the present invention as recited in claim 1, there is provided a steering structure for a saddle riding type vehicle, the steering structure including: a head pipe provided to a front end portion of a vehicle body frame; a top bridge) and a bottom bridge steerably supported by the head pipe; a pair of left and right front fork members retained by the top bridge and the bottom bridge, the pair of left and right front fork members rotatably supporting a front wheel; and a steering provided so as to move integrally with the top bridge; the steering being a bar handle constituted of a single piece of pipe material having a left portion and a right portion continuous with each other and extending in a vehicle width direction; the bar handle being fixed by handle holders at two left and right positions, and the handle holders being provided so as to surround respective upper portions of the left and right front fork members from a periphery.

According to the present invention as recited in claim 1, in the saddle riding type vehicle, the steering is a bar handle constituted of a single piece of pipe material having a left portion and a right portion continuous with each other and extending in a vehicle width direction. The bar handle is fixed by handle holders at two left and right positions, and the handle holders are provided so as to surround respective upper portions of the left and right front fork members from a periphery. Thus, a space can be formed between the left and right handle holders provided so as to surround the respective upper portions of the left and right front fork members from the periphery. Therefore, while the bar handle is used, the space can be secured between the left and right handle holders, and the space can be used effectively as a space for arrangement of parts or the like.

In addition, in the present invention as recited in claim 1, the handle holders include upper side holders and lower side holders, and the lower side holders surround the upper portions of the front fork members.

According to the present invention, the handle holders include upper side holders and lower side holders, and the lower side holders surround the upper portions of the front fork members. Thus, the fixed positions of the handle holders can be lowered, and a distance from the front fork members to the bar handle can be shortened.

In addition, in the present invention as recited in claim 1, the lower side holders have a fitting projecting portion fitted to the top bridge fixed to the front fork members.

According to the present invention as recited in claim 1, the lower side holders have a fitting projecting portion fitted to the top bridge. Thus, the lower side holders can be fixed to the top bridge by the fitting projecting portion with a simple structure.

Further, according to a further embodiment of the present invention, the fitting projecting portion (200) is provided as a left-right pair in positions on an inside in the vehicle width direction of the front fork members.

According to a further embodiment of the present invention, the fitting projecting portion is provided as a left-right pair in positions on the inside in the vehicle width direction of the front fork members. Thus, the fitting projecting portion can be made inconspicuous to the outside, so that external appearance quality can be improved.

In addition, according to a further embodiment of the present invention, the lower side holders and the top bridge are assembled, in a state of being sub-assembled and integrated with each other, to the front fork members.

According to a further embodiment of the present invention, the lower side holders and the top bridge are assembled, in a state of being sub-assembled and integrated with each other, to the front fork members. Thus, a high precision of assembly of the lower side holders and the top bridge is achieved.

In addition, according to a further embodiment of the present invention, the left and right handle holders are fixed to the respective upper portions of the left and right front fork members or the top bridge.

According to a further embodiment of the present invention, the left and right handle holders are fixed to the respective upper portions of the left and right front fork members or the top bridge. Thus, a space for fixing members can be reduced, so that a large space can be secured between the left and right handle holders.

In addition, according to a further embodiment of the present invention, the handle holders are positioned on an inside in the vehicle width direction of the left and right front fork members, and at least part of the handle holders extend upward along the front fork members.

According to a further embodiment of the present invention, the handle holders are positioned on the inside in the vehicle width direction of the left and right front fork members, and at least part of the handle holders extend upward along the front fork members. Thus, the handle holders are not conspicuous to the outside in the vehicle width direction, so that an external appearance quality can be ensured, and also an amount of protrusion of the handle holders to the inside in the vehicle width direction can be reduced, so that the space between the left and right handle holders can be made larger.

Further, in according to a further embodiment of the present invention, an air cleaner case is disposed in a space surrounded by the bar handle and the left and right handle holders.

According to a further embodiment of the present invention, an air cleaner case is disposed in a space surrounded by the bar handle and the left and right handle holders. It is thus possible to improve a degree of freedom of disposition of the air cleaner case, the air cleaner case being disposed on the front side, increase the capacity of the air cleaner case, and improve a degree of freedom of arrangement of other parts in the vicinity of the air cleaner case.

In addition, in according to a further embodiment of the present invention, an intake air duct of the air cleaner case is disposed in the space.

According to a further embodiment of the present invention, an intake air duct of the air cleaner case is disposed in the space between the left and right handle holders. Thus, the intake air duct can be disposed in a position on the front side of the vehicle, so that a high efficiency of air intake is obtained.

In addition, according to a further embodiment of the present invention, the lower side holders include tubular portions surrounding the front fork members and arm portions extending upward from the tubular portions, and a height in a vertical direction of the arm portions is equal to or more than twice a height in the vertical direction of the upper side holders.

According to a further embodiment of the present invention, the lower side holders include tubular portions surrounding the front fork members and arm portions extending upward from the tubular portions, and a height in a vertical direction of the arm portions is equal to or more than twice a height in the vertical direction of the upper side holders. Thus, a vertically large space can be secured between the left and right handle holders, so that the air cleaner case can be made larger.

In the steering structure of the saddle riding type vehicle according to the present invention, a space can be secured between the left and right handle holders while the bar handle is used, and this space can be used effectively as a space for arrangement of parts or the like.

In addition, the fixed positions of the handle holders can be lowered, and a distance from the front fork members to the bar handle can be shortened.

In addition, the lower side holders can be fixed to the top bridge by the fitting projecting portion with a simple structure.

In addition, the fitting projecting portion can be made inconspicuous to the outside, so that external appearance quality can be improved.

Further, a high precision of assembly of the lower side holders and the top bridge can be achieved.

In addition, a space for fixing members can be reduced, so that a large space can be secured between the left and right handle holders.

In addition, an external appearance quality of the handle holders can be ensured, and the space between the left and right handle holders can be made larger.

Further, a degree of freedom of disposition of the air cleaner case can be improved by using the space between the left and right handle holders.

In addition, a high efficiency of air intake is obtained by disposing the intake air duct in the space between the left and right handle holders.

In addition, the air cleaner case can be made vertically large in the space between the left and right handle holders.
FIG. 1 is a right side view of a motorcycle according to an embodiment of the present invention.
FIG. 2 is a plan view of the motorcycle as viewed from above.
FIG. 3 is a front view of a section obtained by sectioning a front portion of the motorcycle along axes of front fork members of a steering system, the section being viewed from the front in a horizontal direction.
FIG. 4 is a plan view of portions around an upper portion of the steering system as viewed from above.
FIG. 5 is a view of portions around the upper portion of the steering system as viewed from above the rear.
FIG. 6 is a view of the steering system as viewed from a front side.
FIG. 7 is an exploded perspective view of the upper portion of the steering system.
FIG. 8 is a perspective view showing a fixed state of a handle holder on a left side.
FIG. 9 is a sectional view taken along a line IX-IX of FIG. 8.
FIG. 10 is a perspective view of the steering system as viewed laterally from a front side.
FIG. 11 is a perspective view of assistance in explaining a method of assembling a top bridge and lower side holders.
FIG. 12 is a view of a steering system in a second embodiment as viewed from a front side.
FIG. 13 is a perspective view of a handle holder on a right side.

Embodiments of the present invention will hereinafter be described with reference to the drawings. It is to be noted that, in the description, directions such as front and rear, left and right, and up and down are the same as directions with respect to a vehicle body unless otherwise specified. In addition, in the figures, symbol FR indicates a forward direction of the vehicle body, symbol UP indicates an upward direction of the vehicle body, and symbol LH indicates a leftward direction of the vehicle body. In addition, in the figures, a rightward direction of the vehicle body may be indicated by symbol RH.

### [First Embodiment]

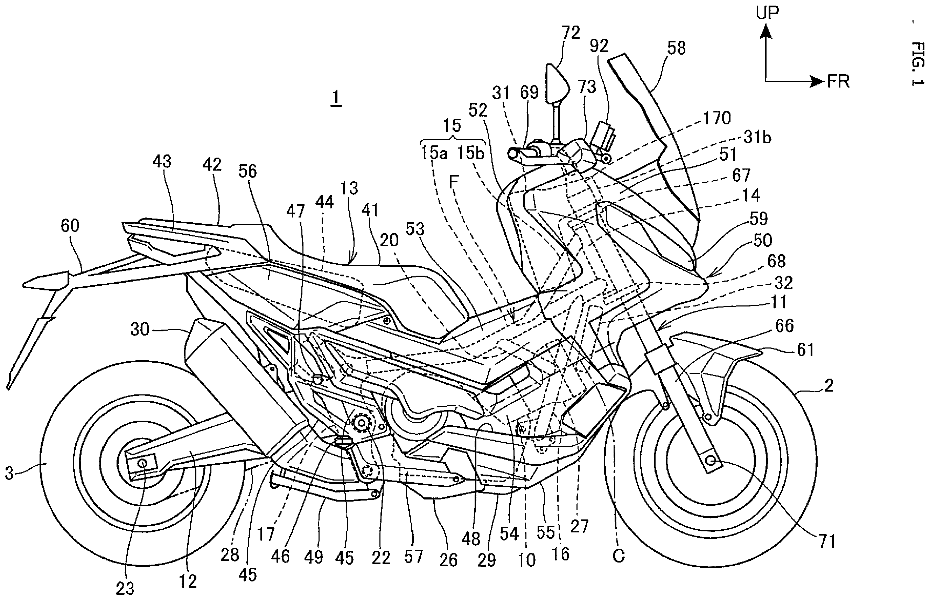

FIG. 1 is a right side view of a motorcycle according to a first embodiment of the present invention. It is to be noted that, hereinafter, the right side view illustrates only a right side part of a pair of left and right parts.

A motorcycle 1 is a vehicle in which an engine 10 as a power unit is supported by a vehicle body frame F, a steering system 11 that steerably supports a front wheel 2 is steerably supported by a front end of the vehicle body frame F, and a swing arm 12 that supports a rear wheel 3 is provided to a rear side of the vehicle body frame F. The motorcycle 1 is a saddle riding type vehicle in which an occupant seat 13 that an occupant is seated so as to straddle is provided to an upper rear portion of the vehicle body frame F.

The vehicle body frame F includes: a head pipe 14 provided at a front end; a pair of left and right main frames 15 extending rearwardly downward from a rear portion of the head pipe 14; a pair of left and right down frames 16 extending rearwardly downward from front end portions of the main frames 15; a pair of left and right pivot frames 17 extending downward from rear ends of the main frames 15; and a pair of left and right rear frames (not shown) extending rearwardly upward from upper portions of the pivot frames 17 to a rear end portion of the vehicle.

Each main frame 15 includes: a main frame main body portion 15a that extends rearwardly downward from a lower portion of the head pipe 14 with a relatively gentle inclination; and a reinforcing frame portion 15b that couples an upper portion of the head pipe 14 to a front portion of the main frame main body portion 15a. The vehicle body frame F also includes a pair of left and right coupling frames 20 that couple intermediate portions of the main frame main body portions 15a to the down frames 16.

The swing arm 12 has a front end portion rotatably supported by a pivot shaft 22 that couples the left and right pivot frames 17 to each other in a vehicle width direction. Thus, the swing arm 12 vertically swings about the pivot shaft 22. The rear wheel 3 is rotatably supported by a rear wheel axle 23 inserted into a rear end portion of the swing arm 12.

The swing arm 12 is coupled to a rear portion of the vehicle body frame F via a rear suspension (not shown).

The engine 10 is mounted so as to be suspended from the vehicle body frame F in front of the pivot frames 17.

The engine 10 includes: a crankcase 26 that supports a crankshaft (not shown) extending in the vehicle width direction; and a cylinder portion 27 that extends forwardly upward from a front portion of the crankcase 26. The crankcase 26 is located below rear portions of the main frames 15. The cylinder portion 27 extends forwardly upward so as to be along the main frames 15. A front portion of the cylinder portion 27 is located between the left and right down frames 16 and between the left and right coupling frames 20.

The engine 10 leans forward such that a cylinder axis C of the cylinder portion 27 is closer to the horizontal than to the vertical. A space is secured above the engine 10.

The output of the engine 10 is transmitted to the rear wheel 3 by a chain 28 wound between an output shaft (not shown) of the engine 10 and the rear wheel 3.

An exhaust pipe 29 of the engine 10 is drawn out downward from a cylinder head of the cylinder portion 27, extends rearward so as to pass below the engine 10, and is connected to a muffler 30 on the right side of the swing arm 12.

An air cleaner case 31 that cleans an air supplied to the engine 10 is disposed above front portions of the main frames 15 and in the rear of the head pipe 14. The air passed through the air cleaner case 31 is adjusted in flow rate by a throttle body (not shown), and flows to the cylinder head of the cylinder portion 27. A radiator 32 of the engine 10 is disposed below the head pipe 14 and in front of the cylinder portion 27.

The occupant seat 13 integrally includes a front side seat 41 for a driver and a rear side seat 42 for a passenger (fellow passenger), the rear side seat 42 being one step higher than the front side seat 41.

The front side seat 41 is disposed above the rear portions of the main frames 15 and above the pivot frames 17. In addition, the front side seat 41 is located above a rear portion of the crankcase 26.

The rear side seat 42 is disposed above rear portions of the above-described rear frames. In addition, the rear side seat 42 is located above a rear portion of the muffler 30 and above a front portion of the rear wheel 3. Gripping portions 43 to be gripped by the passenger seated on the rear side seat 42 are provided to the respective left and right sides of the rear side seat 42.

A fuel tank 44 is disposed below the front side seat 41 and the rear side seat 42.

A pair of left and right plate-shaped step holders 45 is provided to outer surfaces of the pivot frames 17. A pair of left and right sub-steps 46 for the driver and a pair of left and right passenger steps 47 for the passenger are supported by the respective step holders 45. A pair of left and right main steps 48 for the driver is provided in front of and below the front side seat 41.

A main stand 49 is coupled to lower portions of the pivot frames 17.

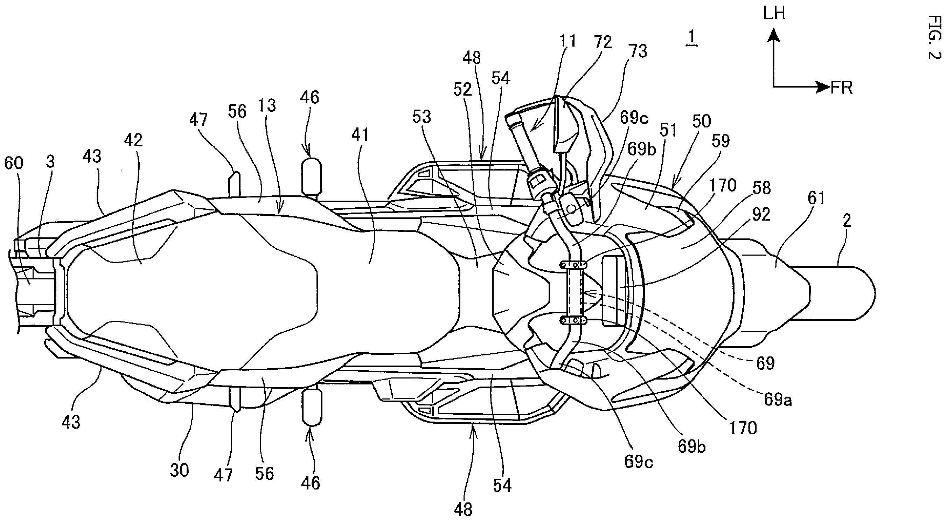

FIG. 2 is a plan view of the motorcycle 1 as viewed from above. Incidentally, FIG. 2 does not show a constitution on a right end side of a bar handle 69 to be described later.

As shown in FIG. 1 and FIG. 2, the motorcycle 1 includes a vehicle body cover 50 that covers the vehicle body. The vehicle body cover 50 includes: a front cover 51 that covers the head pipe 14 and an upper portion of the steering system 11 from the front and the left and right sides; a rear surface cover 52 that is coupled to rear edges of the front cover 51 and covers the head pipe 14 and the upper portion of the steering system 11 from the rear; a seat lower cover 53 in the rear of a lower portion of the front cover 51, the seat lower cover 53 covering the main frames 15 from above and the left and right sides; and a pair of left and right middle side surface covers 54 below the seat lower cover 53, the middle side surface covers 54 covering the engine 10 and the rear portion of the vehicle body frame F from the sides.

The vehicle body cover 50 also includes: an under cover 55 that covers the engine 10 from below; a pair of left and right rear covers 56 in the rear of the seat lower cover 53, the rear covers 56 covering a lower part of the occupant seat 13 from the sides; and a pair of left and right frame covers 57 that cover a rear lower portion of the engine 10 and lower portions of the pivot frames 17 from the sides.

A front portion of the front cover 51 is provided with a plate-shaped windscreen 58 that extends vertically. A headlight 59 is provided to a front surface of the front cover 51.

The motorcycle 1 includes a rear fender 60 that covers the rear wheel 3 from above and a front fender 61 that covers the front wheel 2 from above.

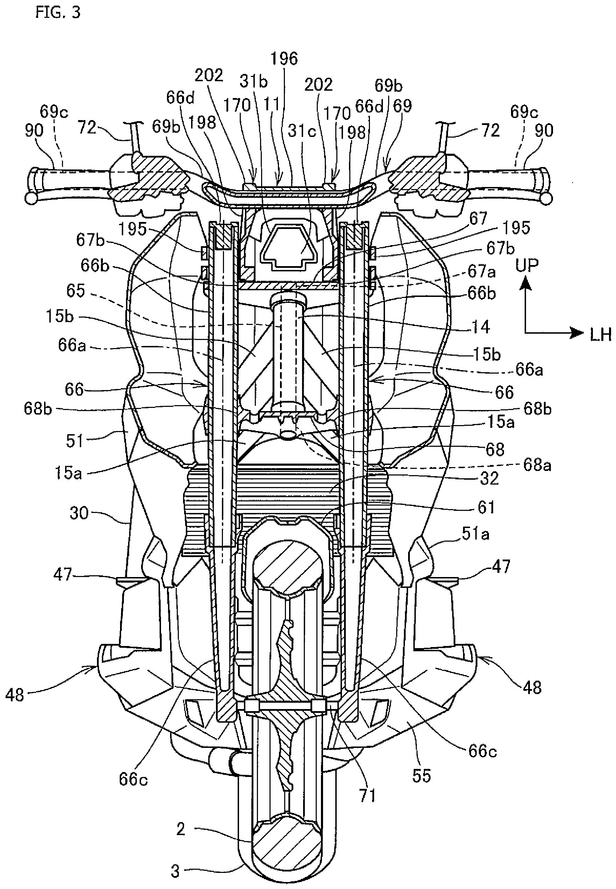

FIG. 3 is a front view of a section obtained by sectioning a front portion of the motorcycle 1 along axes 66a of front fork members 66 of the steering system 11, the section being viewed from the front in a horizontal direction.

Referring to FIGS. 1 to 3, the steering system 11 includes: a steering shaft 65 (FIG. 3) rotatably supported by the head pipe 14; a pair of left and right front fork members 66 arranged on both of the left and right sides of the front wheel 2 to support the front wheel 2; a top bridge 67 fixed to an upper end of the steering shaft 65 and coupling the left and right front fork members 66 to each other; and a bottom bridge 68 fixed to a lower end of the steering shaft 65 and coupling the left and right front fork members 66 to each other. The steering system 11 also includes: a bar handle 69 as a steering provided above the front fork members 66; and a pair of left and right handle holders 170 that fix the bar handle 69 to the front fork members 66.

The top bridge 67 is a plate-shaped member extending in the vehicle width direction. The top bridge 67 has, in a center thereof in the vehicle width direction, a shaft fixing hole portion 67a in which the steering shaft 65 is fixed, and has, in both end portions thereof in the vehicle width direction, fork supporting hole portions 67b into which the front fork members 66 are inserted.

The bottom bridge 68 is a plate-shaped member extending in the vehicle width direction. The bottom bridge 68 has, in a center thereof in the vehicle width direction, a shaft fixing hole portion 68a in which the steering shaft 65 is fixed, and has, in both end portions thereof in the vehicle width direction, fork supporting hole portions 68b into which the front fork members 66 are inserted. Specifically, split clamp bolts (not shown) provided to the fork supporting hole portions 67b and the fork supporting hole portions 68b are tightened, and the front fork members 66 are held by the fork supporting hole portions 67b and the fork supporting hole portions 68b reduced in diameter by the fastening forces, whereby the front fork members 66 are supported by the top bridge 67 and the bottom bridge 68.

The top bridge 67 is fixed above the head pipe 14 to an upper end of the steering shaft 65. The bottom bridge 68 is fixed below the head pipe 14 to a lower end of the steering shaft 65.

The axes 66a of the front fork members 66 are inclined rearward with respect to a vertical direction by an amount corresponding to a caster angle set to the motorcycle 1.

Each of the front fork members 66 includes an upper tube 66b having a circular cross section, the upper tube 66b being supported by the top bridge 67 and the bottom bridge 68, and a lower tube 66c provided so as to be capable of a stroke in an axial direction with respect to the upper tube 66b. An upper surface of the upper tube 66b is covered by a fork cap 66d screwed into an inner circumferential surface of an upper end of the upper tube 66b.

The front wheel 2 is rotatably supported by a front wheel axle 71 stretched between lower end portions of the lower tubes 66c.

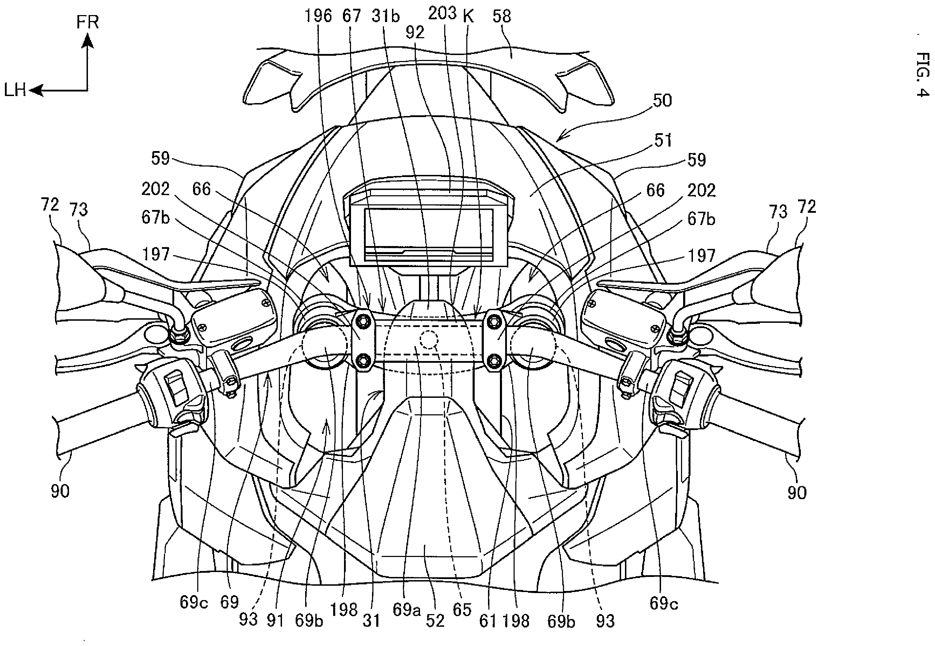

FIG. 4 is a plan view of portions around the upper portion of the steering system 11 as viewed from above.

As shown in FIG. 3 and FIG. 4, the bar handle 69 is formed in the shape of a bar constituted of a single piece of pipe material extending in the vehicle width direction. The bar handle 69 integrally includes: a handle central portion 69a extending in the vehicle width direction above the top bridge 67; bent portions 69b rising upward from both ends of the handle central portion 69a to outsides in the vehicle width direction; and extending portions 69c extending from upper ends of the bent portions 69b outwardly of the front fork members 66 in the vehicle width direction.

The bar handle 69 is provided above the front fork members 66 by fixing both of left and right end portions of the handle central portion 69a to the handle holders 170.

The extending portions 69c of the bar handle 69 are provided with grips 90 to be gripped by the driver, a pair of left and right rearview mirrors 72, a pair of left and right knuckle guards 73 (FIG. 1), and the like. The bar handle 69 is formed by a single piece of pipe material continuous from the extending portion 69c on the left side which extending portion is provided with the left grip 90 to the extending portion 69c on the right side which extending portion is provided with the right grip 90.

As shown in FIG. 4, the vehicle body cover 50 includes a steering space portion 91 between the front cover 51 and the rear surface cover 52, through which space portion the steering system 11 passes in an upward-downward direction. The bar handle 69 is located above the steering space portion 91. The steering space portion 91 has a size such that the steering system 11 can rotate about the steering shaft 65. As viewed in plan, the steering space portion 91 is formed in a substantially rectangular shape surrounding the periphery of the front fork members 66.

A navigation device 92 is provided in front of the bar handle 69. The navigation device 92 is for example supported by the front cover 51. Incidentally, FIG. 4 shows only the position of the windscreen 58, and does not show a structure that fixes the windscreen 58 to the front cover 51.

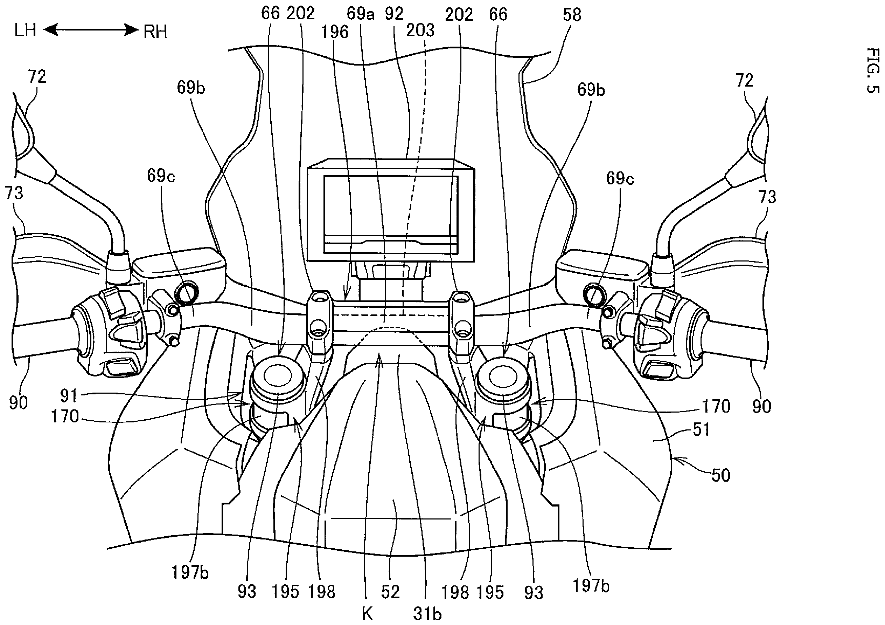

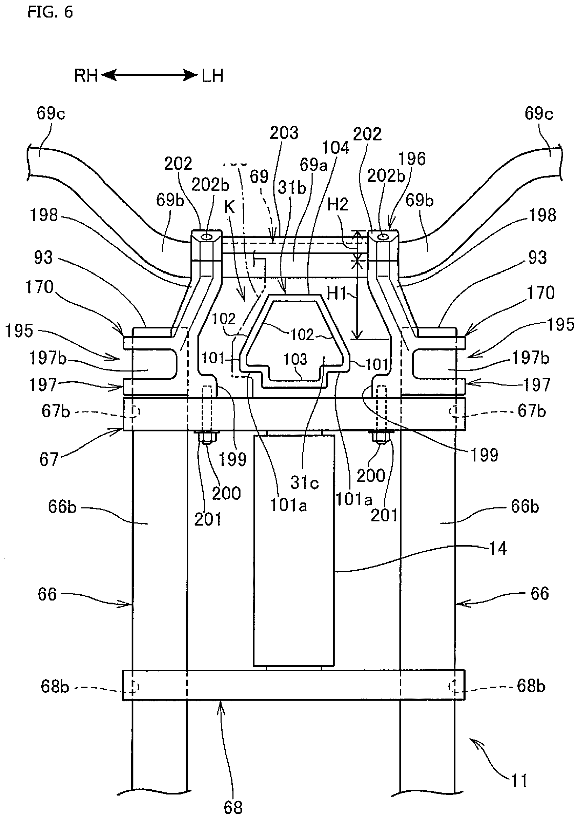

FIG. 5 is a view of portions around the upper portion of the steering system 11, as viewed from above the rear. FIG. 6 is a view of the steering system 11 as viewed from the front side.

As shown in FIG. 5 and FIG. 6, the front fork members 66 include upward projecting portions 93 formed by projecting the upper tubes 66b above the top surface of the top bridge 67.

The left and right handle holders 170 are provided so as to surround the left and right upward projecting portions 93, respectively.

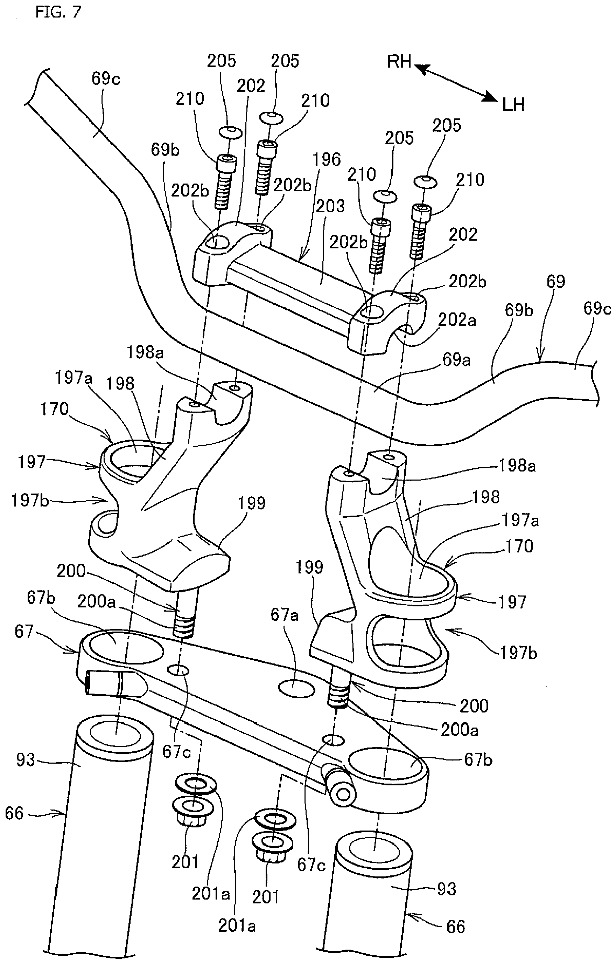

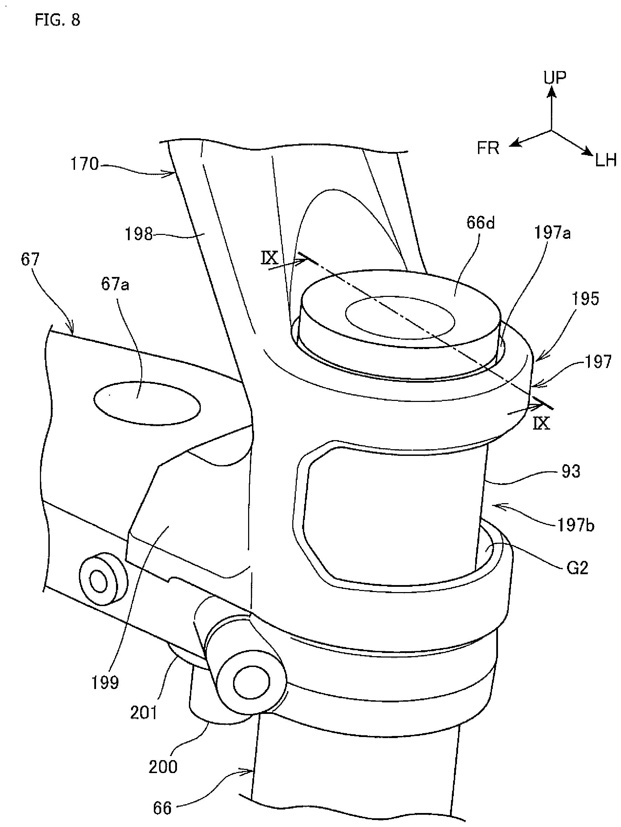

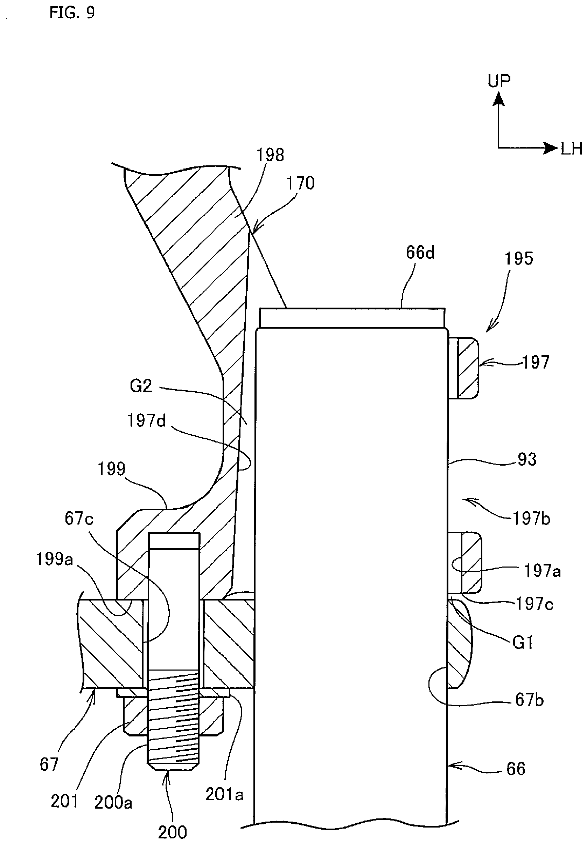

FIG. 7 is an exploded perspective view of the upper portion of the steering system 11. FIG. 8 is a perspective view showing a fixed state of the left side handle holder 170. FIG. 9 is a sectional view taken along a line IX-IX of FIG. 8.

Referring to FIGS. 6 to 9, the handle holders 170 include: lower side holders 195 fixed to the upward projecting portions 93 of the front fork members 66; and an upper side fixing body 196 fixed to the top surfaces of the lower side holders 195. The handle holders 170 are formed bilaterally symmetrically with respect to a center line in the vehicle width direction.

The lower side holders 195 include: cylindrical tubular portions 197 that surround the outer circumferential surfaces of the upward projecting portions 93 from the periphery; arm portions 198 that extend upward from the tubular portions 197; and block-shaped inward extending portions 199 that extend from lower end portions of the tubular portions 197 to the inside in the vehicle width direction.

The tubular portions 197 of the lower side holders 195 include: fork insertion holes 197a into which the upward projecting portions 93 are inserted; and side surface opening portions 197b formed by notching side surface portions of the tubular portions 197. The side surface opening portions 197b are formed in outside side surfaces in the vehicle width direction of the tubular portions 197 and in vertically intermediate portions of the tubular portions 197. The lower side holders 195 are lightened by the side surface opening portions 197b, and are thus formed so as to have light weight. Incidentally, a constitution without the side surface opening portions 197b may also be adopted.

The inward extending portions 199 include: lower surface portions 199a that abut against the upper surface of the top bridge 67; and fitting projecting portions 200 that extend downward from the lower surface portions 199a. The fitting projecting portions 200 are pin-shaped members extending perpendicularly to the upper surface of the top bridge 67. The fitting projecting portions 200 are provided in parallel with the front fork members 66.
In the present first embodiment, the fitting projecting portions 200 are stud bolts embedded in the inward extending portions 199, and include, as lower end portions thereof, threaded portions 200a to which nuts 201 are fastened.

The fitting projecting portions 200 are inserted from above into holder fixing holes 67c provided in the top bridge 67. The holder fixing holes 67c are adjacent to the fork supporting hole portions 67b, and provided inside the fork supporting hole portions 67b in the vehicle width direction.

The arm portions 198 extend upward from upper portions of inside parts in the vehicle width direction of the tubular portions 197 so as to be along the outer circumferential surfaces of the upward projecting portions 93. In this case, the inside in the vehicle width direction of the tubular portions 197 is the same side as the inside in the vehicle width direction of the outer circumferential surfaces of the front fork members 66.

Specifically, when viewed from the front, the arm portions 198 are inclined such that the arm portions 198 are located more inward in the vehicle width direction toward the upper side. This inclination is closer to the vertical direction than to the horizontal direction. In addition, lower edge portions of the arm portions 198 are formed in the shape of an arc so as to be along the arc shape of the tubular portions 197. Rigidity of the arm portions 198 is therefore ensured.

The arm portions 198 extend above top surfaces of the upward projecting portions 93 of the front fork members 66. Lower side notch portions 198a that are semicircular as viewed from the side are formed in central portions in a forward-rearward direction on top surface sides of the arm portions 198.

The upper side fixing body 196 is formed in the shape of a plate extending in the vehicle width direction along an upper surface of the handle central portion 69a.

The upper side fixing body 196 includes: upper side holders 202 whose lower surfaces are formed in such a size as to be superposed on substantially the respective entire top surfaces of the arm portions 198; and a coupling portion 203 that couples the upper side holders 202 to each other in the vehicle width direction. Upper side notch portions 202a that are semicircular as viewed from the side are formed in central portions in the forward-rearward direction on undersurface sides of the upper side holders 202. In addition, each upper side holder 202 has bolt insertion holes 202b at a front position and a rear position across the upper side notch portion 202a, the bolt insertion holes 202b vertically penetrating the upper side holder 202.

Incidentally, while description will be made taking, as an example, a constitution in which the upper side fixing body 196 is formed by coupling the upper side holders 202 to each other by the coupling portion 203 in the present first embodiment, the upper side fixing body 196 may be formed by the left and right upper side holders 202 separate from each other without the coupling portion 203 being provided. That is, it suffices for the handle holders 170 provided as a pair of left and right handle holders to include at least the left and right lower side holders 195 and the left and right upper side holders 202.

Upper side holder fixing bolts 210 are inserted into the bolt insertion holes 202b of each upper side holder 202. The upper side holders 202 are fixed to the lower side holders 195 by fastening each upper side holder fixing bolt 210 to the top surface of the arm portion 198. The bolt insertion holes 202b are covered by caps 205 covering heads of the upper side holder fixing bolts 210.

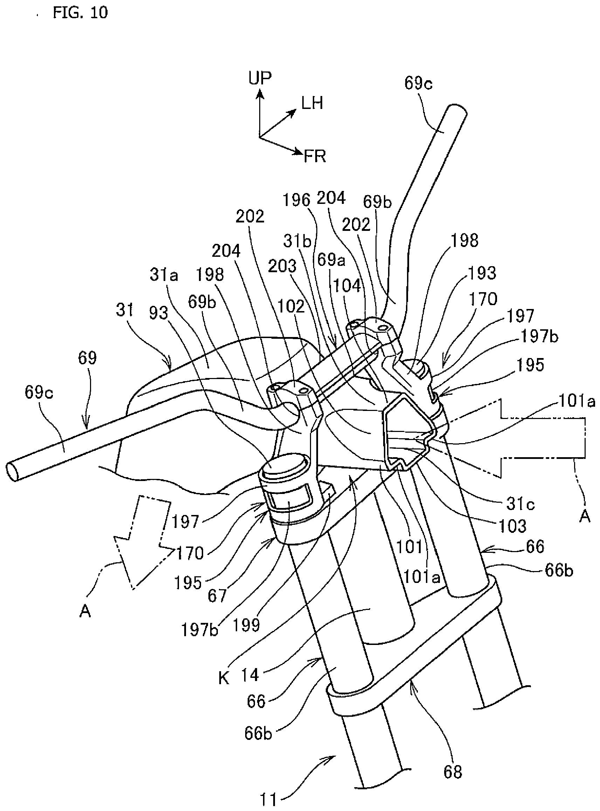

When the upper side holders 202 are fixed to the lower side holders 195, the lower side notch portions 198a and the upper side notch portions 202a are put together, thus forming handle supporting holes 204 (FIG. 10) that are circular as viewed from the side. The bar handle 69 is fixed to the handle holders 170 with both end portions of the handle central portion 69a sandwiched between the lower side notch portions 198a and the upper side notch portions 202a.

As shown in FIG. 9, each lower side holder 195 is fixed to the top bridge 67 by inserting the upward projecting portion 93 into the tubular portion 197, and fastening the nut 201 to the threaded portion 200a of the fitting projecting portion 200 penetrating the holder fixing hole 67c. A washer 201a is interposed between the nut 201 and the undersurface of the top bridge 67.

The lower surface portion 199a of the inward extending portion 199 of the lower side holder 195 projects downward one step below an undersurface 197c of the tubular portion 197. Therefore, a gap G1 is formed between the upper surface of the top bridge 67 and the undersurface 197c in a state in which the lower side holder 195 is fixed.

A length in an axial direction of the tubular portions 197 is smaller than a length of the upward projecting portions 93. The upper end portions of the upward projecting portions 93 thus project upward from the top surfaces of the tubular portions 197.

An inner circumferential portion 197d of the tubular portion 197 is formed so as to have a larger diameter than the outside diameter of the upward projecting portion 93 so that a gap G2 having a predetermined size is formed between the inner circumferential portion 197d and the outer circumferential surface of the upward projecting portion 93. That is, in a state in which the lower side holder 195 is assembled to the top bridge 67, the tubular portion 197 surrounds the upward projecting portion 93 from the periphery, but the inner circumferential portion 197d of the tubular portion 197 is not in contact with the outer circumferential surface of the upward projecting portion 93.

In addition, the inner circumferential portion 197d is formed in a tapered shape so as to decrease in inside diameter toward an upper end side throughout an overall length of the tubular portion 197. The upward projecting portion 93 has a same diameter throughout an overall length of the upward projecting portion 93. Hence, the gap G2 is smaller toward the upper end side of the tubular portion 197.

The lower side holders 195 are positioned with respect to the top bridge 67 by fitting the fitting projecting portions 200 into the holder fixing holes 67c and assembling the bar handle 69 into the handle supporting holes 204. Therefore, clearances between the fitting projecting portions 200 and the holder fixing holes 67c are set relatively small so as to be able to secure the gap G2.

As shown in FIG. 6, when the bar handle 69 is fixed to the handle holders 170, a front space K is formed between the left and right front fork members 66, with the left and right of the front space K surrounded by the handle holders 170, and with the upper and lower sides of the front space K surrounded by the upper surface of the top bridge 67 and the bar handle 69.

FIG. 10 is a perspective view of the steering system 11 as viewed laterally from the front side.

Referring to FIGS. 4 to 6 and FIG. 10, the air cleaner case 31 includes a box-shaped case main body 31a located in the rear of the top bridge 67 and the head pipe 14 and an intake air duct 31b extending frontward from an upper portion of the case main body 31a.

The intake air duct 31b is disposed within the front space K. Specifically, the intake air duct 31b is located in a middle portion between the left and right lower side holders 195, and is located between the upper surface of the top bridge 67 and the undersurface of the handle central portion 69a.

The intake air duct 31b is passed through the front space K from the rear. An intake air opening 31c in a front end face of the intake air duct 31b opens to the front side of the motorcycle 1. The intake air opening 31c opens forward of a front surface of the top bridge 67.

An air A taken in by the air cleaner case 31 is sucked from the intake air opening 31c into the intake air duct 31b, is then cleaned by passing through a filter within the case main body 31a, and flows downward to be supplied to the engine 10.

Because the intake air duct 31b of the air cleaner case 31 is thus provided within the front space K, the intake air duct 31b can be disposed on the front side. Therefore, as compared with a constitution in which the intake air duct is provided in the rear of the top bridge 67, for example, the air cleaner case 31 can be disposed on the front side. This makes it possible to improve a degree of freedom of disposition of the air cleaner case 31, increase the capacity of the air cleaner case 31, and improve a degree of freedom of disposition of other parts in the vicinity of the air cleaner case 31.

In addition, the intake air duct 31b is positioned between the handle central portion 69a and the top bridge 67, and is thus provided in a position close to a front end of the motorcycle 1. Consequently, a traveling wind easily blows into the intake air duct 31b. It is therefore possible to suck the traveling wind of the motorcycle 1 from the intake air opening 31c efficiently, and improve efficiency of air intake.

The intake air duct 31b is formed such that a front end portion of the intake air duct 31b is tapered in the vehicle width direction toward the front end side, as viewed in plan.

In addition, as shown in FIG. 6, as viewed from the front side, the intake air duct 31b is formed such that the side surface portions of the intake air duct 31b are along the inner surfaces of the lower side holders 195. Specifically, the intake air duct 31b integrally includes: lower side walls 101 that extend upward along the inner surfaces of the tubular portions 197; upper side walls 102 that extend upward along the inner surfaces of the arm portions 198; a lower wall 103 that couples lower edges of the lower side walls 101 to each other in the vehicle width direction; and an upper wall 104 that couples upper edges of the upper side walls 102 to each other in the vehicle width direction. The upper side walls 102 are inclined so as to be located more inward in the vehicle width direction toward the upper side. The lower side walls 101 also include clearance portions 101a recessed to the inside in the vehicle width direction so as to avoid the inward extending portions 199.

When the steering system 11 is steered to a limit position on one side (left side), as indicated by a phantom line in FIG. 6, the inner surface of the lower side holder 195 on the right side approaches the outer surface of the intake air duct 31b. Even in this state, a clearance is secured between the inner surface of the lower side holder 195 and the outer surface of the intake air duct 31b. In the present first embodiment, the intake air duct 31b includes the lower side walls 101, the upper side walls 102, and the clearance portions 101a. The intake air duct 31b is thus formed along the inner surface of the lower side holder 195, so that a large dimension in the vehicle width direction of the intake air duct 31b can be secured. Therefore, intake air resistance can be reduced, and a good efficiency of air intake is achieved.

In addition, a height H1 in the vertical direction of the arm portions 198 of the lower side holders 195 is equal to or more than twice a height H2 in the vertical direction of the upper side holders 202. This makes it possible to increase the vertical height of the front space K, and thus increase the vertical height of the intake air duct 31b. Therefore, intake air resistance can be reduced, and a good efficiency of air intake is achieved.

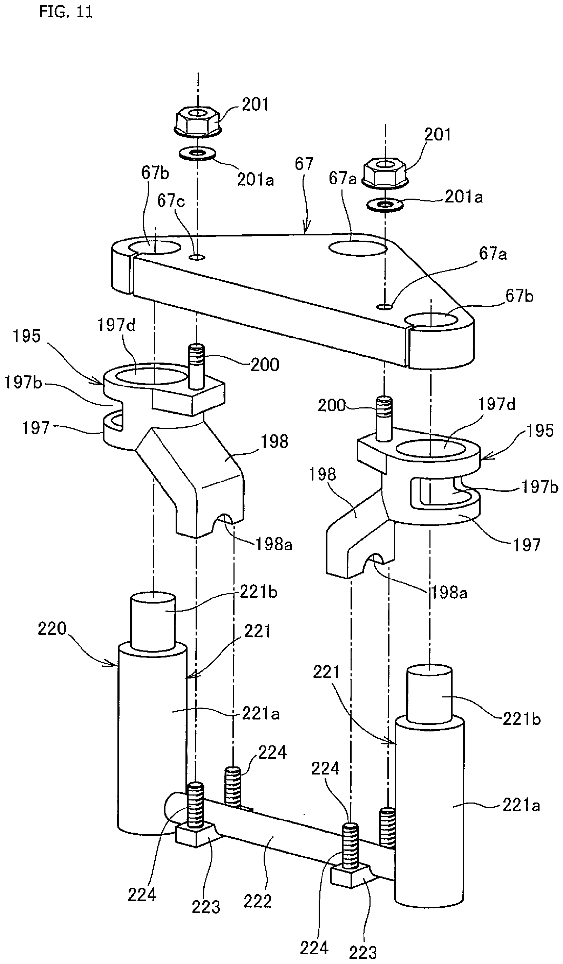

FIG. 11 is a perspective view of assistance in explaining a method of assembling the top bridge 67 to the lower side holders 195.

The top bridge 67 is assembled to the lower side holders 195 by using a jig 220. When the top bridge 67 and the lower side holders 195 are set to the jig 220, the top bridge 67 and the lower side holders 195 are in a positional relation similar to a positional relation in which the top bridge 67 and the lower side holders 195 are actually assembled to the front fork members 66 and the bar handle 69.

The jig 220 includes: cylindrical columnar portions 221 provided as a left-right pair; a rod-shaped portion 222 that horizontally couples lower portions of the columnar portions 221 to each other; and a pair of left and right holder fixing portions 223 provided to an undersurface of the rod-shaped portion 222.

The columnar portions 221 are members corresponding to the front fork members 66. The columnar portions 221 include lower side holder fitting portions 221a on which the inner circumferential portions 197d of the tubular portions 197 are fitted and top bridge fitting portions 221b on which the fork supporting hole portions 67b of the top bridge 67 are fitted. The top bridge fitting portions 221b are located above the lower side holder fitting portions 221a, and are formed so as to be smaller in diameter than the lower side holder fitting portions 221a.

The rod-shaped portion 222 is a member corresponding to the handle central portion 69a. A shape of the rod-shaped portion 222 including a diameter thereof is formed similar to that of the handle central portion 69a. The rod-shaped portion 222 horizontally couples lower end portions of the lower side holder fitting portions 221a to each other.

The holder fixing portions 223 are members corresponding to the upper side holders 202 of the upper side fixing body 196. A plurality of bolts 224 corresponding to the upper side holder fixing bolts 210 are inserted into the holder fixing portions 223 from below. The holder fixing portions 223 have a shape similar to that of the upper side holders 202 of the upper side fixing body 196, and are provided to the rod-shaped portion 222 in a positional relation similar to a positional relation between the upper side holders 202 and the handle central portion 69a.

In assembling work using the jig 220, the lower side holders 195 in a state of being upside down are inserted onto the columnar portions 221 from above. The tubular portions 197 are fitted onto the lower side holder fitting portions 221a, and the arm portions 198 are fixed to upper surfaces of the holder fixing portions 223 by the bolts 224.

The top bridge 67 is inserted onto the top bridge fitting portions 221b from above. The fork supporting hole portions 67b are thereby fitted onto the top bridge fitting portions 221b, and the holder fixing holes 67c are fitted onto the fitting projecting portions 200. Thereafter, the nuts 201 and the washers 201a are fixed to the fitting projecting portions 200 projecting upward from the holder fixing holes 67c. A subassembly is thereby formed in which the top bridge 67 and the lower side holders 195 are integrated with each other.

The subassembly assembled with high precision by using the jig 220 can be thus formed in advance.
Therefore the subassembly can be easily assembled to the front fork members 66 afterward, so that good productivity is achieved.

In the present first embodiment, the bar handle 69 constituted of a single piece of pipe material extending in the vehicle width direction is fixed by the handle holders 170 at the two left and right positions which handle holders are provided so as to surround the upward projecting portions 93 of the left and right front fork members 66 from the periphery by the tubular portions 197. Because the tubular portions 197 are formed with a large diameter so as to surround the upward projecting portions 93, the tubular portions 197 have a function of greatly improving the rigidity of the handle holders 170. In addition, because the tubular portions 197 are provided so as to be along the outer circumferential surfaces of the upward projecting portions 93, the tubular portions 197 are provided in a space saving manner without greatly protruding in the radial direction of the upward projecting portions 93. It is thus possible to form the front space K between the left and right handle holders 170 while ensuring the rigidity of the handle holders 170, and dispose the intake air duct 31b in the front space K.

On the other hand, for example, a constitution is possible in which a handle holder is fixed to the upper surface in a central portion in the vehicle width direction of the top bridge 67. In this case, however, the handle holder occupies the space between the left and right front fork members 66, and it is therefore difficult to dispose parts such as the intake air duct and the like.

In addition, the arm portions 198 of the handle holders 170 are positioned on the inside in the vehicle width direction of the left and right upward projecting portions 93. The lower portions of the arm portions 198 extend upward so as to be along the inner surfaces of the upward projecting portions 93. The upper portions of the arm portions 198 are also extended upward so as to be along the lower portions. Consequently, part of the arm portions 198 are hidden by the upward projecting portions 93, and are thus not conspicuous to the outside in the vehicle width direction. Therefore an external appearance quality can be ensured. In addition, an amount of protrusion of the arm portions 198 to the inside of the front space K can be reduced, so that a large front space K can be secured in the vehicle width direction. Moreover, the fitting projecting portions 200 are also located on the inside in the vehicle width direction of the upward projecting portions 93. The fitting projecting portions 200 and the nuts 201 are therefore not conspicuous to the outside in the vehicle width direction, so that an external appearance quality can be ensured.

In addition, because the arm portions 198 of the handle holders 170 are provided on the inside in the vehicle width direction of the upward projecting portions 93, the arm portions 198 do not become obstacles in the steering space portion 91 (FIG. 4), and thus the size of the steering space portion 91 can be reduced. A degree of freedom of design is therefore improved.

Further, because the handle holders 170 located on the inside in the vehicle width direction of the upward projecting portions 93 support the handle central portion 69a, the handle central portion 69a extending horizontally can be supported, and the shape of the handle supporting holes 204 can be made to be a simple shape.

In addition, because the handle holders 170 located on the inside in the vehicle width direction of the upward projecting portions 93 support the handle central portion 69a, the positions of the bent portions 69b of the bar handle 69 can be brought near the central side in the vehicle width direction. A degree of freedom of shape of the bar handle 69 can therefore be improved.

As described above, according to the first embodiment to which the present invention is applied, the motorcycle 1 includes: the head pipe 14 provided to a front end portion of the vehicle body frame F; the top bridge 67 and the bottom bridge 68 steerably supported by the head pipe 14; the pair of left and right front fork members 66 retained by the top bridge 67 and the bottom bridge 68, the pair of left and right front fork members 66 rotatably supporting the front wheel 2; and the steering provided so as to move integrally with the top bridge 67; the steering being the bar handle 69 constituted of a single piece of pipe material having a left portion and a right portion continuous with each other and extending in the vehicle width direction, and the bar handle 69 being fixed by the handle holders 170 at two left and right positions, and the handle holders 170 being provided so as to surround the upward projecting portions 93 from the periphery, the upward projecting portions 93 being the respective upper portions of the left and right front fork members 66. Consequently, rigidity of the handle holders 170 can be ensured, and the front space K can be formed between the left and right handle holders 170 fixed to the upper portions of the left and right front fork members 66, respectively. Therefore, the front space K can be secured between the left and right handle holders 170 while the bar handle 69 simple in structure and low in cost is used, and the front space K can be used effectively as a space for arrangement of parts or the like.

In addition, the handle holders 170 include the upper side holders 202 and the lower side holders 195, and the lower side holders 195 surround the upward projecting portions 93 of the front fork members 66. Thus, the fixed positions of the handle holders 170 can be lowered, and a distance from the front fork members 66 to the bar handle 69 can be shortened.

In addition, the lower side holders 195 have the fitting projecting portions 200 fitted to the top bridge 67. Thus, the lower side holders 195 can be fixed to the top bridge 67 by the fitting projecting portions 200 with a simple structure.

Further, the fitting projecting portions 200 are provided as a left-right pair in positions on the inside in the vehicle width direction of the front fork members 66. Thus, the fitting projecting portions 200 can be made inconspicuous to the outside, so that external appearance quality can be improved.

In addition, the lower side holders 195 and the top bridge 67 are assembled, in a state of being sub-assembled and integrated with each other, to the front fork members 66. Thus, a high precision of assembly of the lower side holders 195 and the top bridge 67 is achieved.

In addition, the left and right handle holders 170 are fixed to the top bridge 67. Thus, a space of the members for fixing the handle holders 170 can be reduced, so that a large space can be secured between the left and right handle holders 170.

In addition, the handle holders 170 are positioned on the inside in the vehicle width direction of the left and right front fork members 66, and the arm portions 198 as part of the handle holders 170 extend upward along the front fork members 66. Thus, the handle holders 170 are not conspicuous to the outside in the vehicle width direction, so that an external appearance quality can be ensured, and also an amount of protrusion of the handle holders 170 to the inside in the vehicle width direction can be reduced, so that the front space K between the left and right handle holders 170 can be made larger.

Further, the air cleaner case 31 is disposed in the front space K surrounded by the bar handle 69 and the left and right handle holders 170. It is thus possible to improve a degree of freedom of disposition of the air cleaner case 31, the air cleaner case 31 being disposed on the front side, increase the capacity of the air cleaner case 31, and improve a degree of freedom of arrangement of other parts in the vicinity of the air cleaner case 31.

In addition, the intake air duct 31b of the air cleaner case 31 is disposed in the front space K between the left and right handle holders 170. Thus, the intake air duct 31b can be disposed in a position on the front side of the motorcycle 1, so that a high efficiency of air intake is obtained.

In addition, the lower side holders 195 include the tubular portions 197 surrounding the front fork members 66 and the arm portions 198 extending upward from the tubular portions 197, and the height H1 in the vertical direction of the arm portions 198 is equal to or more than twice the height H2 in the vertical direction of the upper side holders 202. Thus, a vertically large front space K can be secured between the left and right handle holders 170, so that the air cleaner case 31 can be made larger.

### [Second Embodiment]

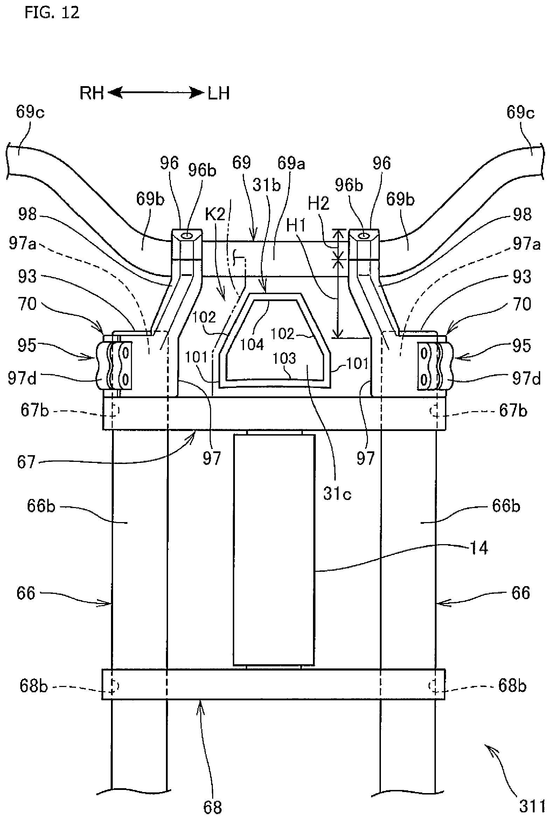

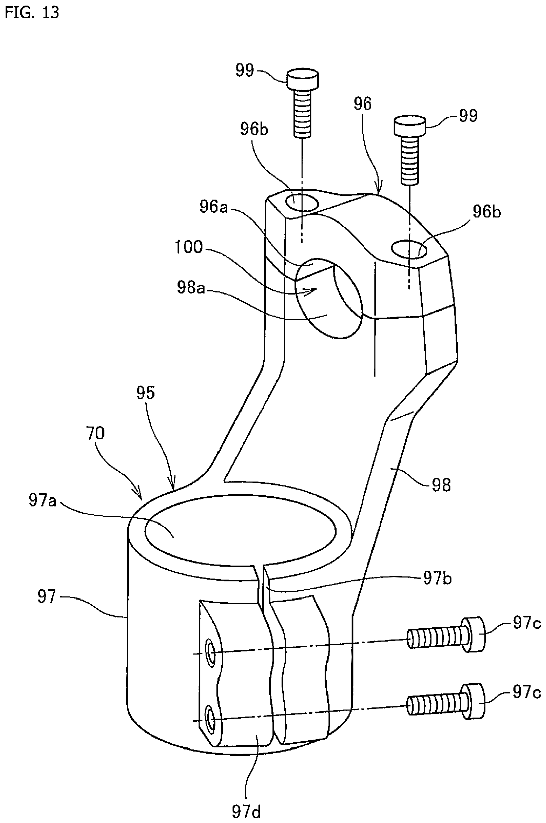

A second not claimed aspect to which the present disclosure is applied will be described in the following with reference to FIG. 12 and FIG. 13. In the second aspect, parts formed in a similar manner to those of the first embodiment are identified by the same reference symbols, and description thereof will be omitted.

The present second aspect is different from the first embodiment in that lower side holders 95 surrounding upward projecting portions 93 are fixed to upward projecting portions 93, for example.

FIG. 12 is a view of a steering system 311 in the second embodiment as viewed from a front side. FIG. 13 is a perspective view of a handle holder 70 on a right side.

The steering system 311 includes front fork members 66, a top bridge 67, a bottom bridge 68, a bar handle 69, and a pair of left and right handle holders 70 that fix the bar handle 69 to the front fork members 66.

The handle holders 70 are formed bilaterally symmetrically. FIG. 13 does not show the handle holder 70 on a left side.

The handle holders 70 include: lower side holders 95 fixed to upward projecting portions 93 of the front fork members 66; and upper side holders 96 fixed to top surfaces of the lower side holders 95.

The lower side holders 95 include: cylindrical tubular portions 97 fitted and fixed to outer circumferential surfaces of the upward projecting portions 93; and arm portions 98 extending upward from the tubular portions 97.

The tubular portions 97 of the lower side holders 95 include: fork insertion holes 97a into which the upward projecting portions 93 are inserted; opening portions 97b formed by cutting away part of outer circumferential portions of the tubular portions 97 into the shape of vertically extending slits; split clamp bolts 97c tightened in a direction of decreasing the size of the opening portions 97b; and fastening portions 97d to which the split clamp bolts 97c are fastened. The fastening portions 97d are formed so as to project in a radial direction from the outer circumferential portions of the tubular portions 97.

The lower side holders 95 are fixed to the outer circumferential surfaces of the upward projecting portions 93 by a tight binding force produced by a reduction in diameter of the fork insertion holes 97a as a result of each split clamp bolt 97c being tightened. A length in an axial direction of the tubular portions 97 is smaller than a length of the upward projecting portions 93. Upper portions of the upward projecting portions 93 thus project upward from top surfaces of the tubular portions 97.

That is, the tubular portions 97 of the lower side holders 95 are fixed to the upward projecting portions 93 such that the tubular portions 97 surround the outer circumferential surfaces of the upward projecting portions 93 from the periphery, and sandwich the outer circumferential surfaces of the upward projecting portions 93.

The arm portions 98 extend upward from upper portions of inner parts in the vehicle width direction of the tubular portions 97 so as to be along the outer circumferential surfaces of the upward projecting portions 93. In this case, the inside in the vehicle width direction of the tubular portions 97 is the same side as the inside in the vehicle width direction of the outer circumferential surfaces of the front fork members 66.

Specifically, when viewed from the front, the arm portions 98 are inclined so as to be located more inward in the vehicle width direction toward the upper side. This inclination is closer to the vertical direction than to the horizontal direction. In addition, lower edge portions of the arm portions 98 are formed in the shape of an arc so as to be along the arc shape of the tubular portions 97. Rigidity of the arm portions 98 is therefore ensured.

The arm portions 98 extend above top surfaces of the upward projecting portions 93 of the front fork members 66. Lower side notch portions 98a that are semicircular as viewed from the side are formed in central portions in the forward-rearward direction on top surface sides of the arm portions 98.

The upper side holders 96 are block-shaped members whose lower surfaces are formed in such a size as to be superposed on substantially the entire top surfaces of the arm portions 98. Upper side notch portions 96a that are semicircular as viewed from the side are formed in central portions in the forward-rearward direction on undersurface sides of the upper side holders 96. In addition, each upper side holder 96 has bolt insertion holes 96b at a front position and a rear position across the upper side notch portion 96a, the bolt insertion holes 96b vertically penetrating the upper side holder 96.

Upper side holder fixing bolts 99 are inserted into the bolt insertion holes 96b of each upper side holder 96. Each upper side holder 96 is fixed to the lower side holder 95 by fastening the upper side holder fixing bolts 99 to the top surface of the arm portion 98.

When the upper side holders 96 are fixed to the lower side holders 95, the lower side notch portions 98a and the upper side notch portions 96a are put together, thus forming handle supporting holes 100 that are circular as viewed from the side. The bar handle 69 is fixed to the handle holders 70 when both end portions of a handle central portion 69a of the bar handle 69 are sandwiched between the lower side notch portions 98a and the upper side notch portions 96a.

When the bar handle 69 is fixed to the handle holders 70, a front space K2 (space) is formed between the left and right front fork members 66, with the left and right of the front space K2 surrounded by the handle holders 70, and with the upper and lower sides of the front space K2 surrounded by the upper surface of the top bridge 67 and the bar handle 69.

An intake air duct 31b of an air cleaner case 31 is disposed within the front space K2. Specifically, the intake air duct 31b is located in a middle portion between the left and right lower side holders 95, and is located between the upper surface of the top bridge 67 and the undersurface of the handle central portion 69a.

As shown in FIG. 12, when viewed from the front side, the side surface portion of the intake air duct 31b is formed so as to be along the inner surfaces of the lower side holders 95.

When the steering system 311 is steered to a limit position on one side (left side), as indicated by a phantom line in FIG. 12, the inner surface of the lower side holder 95 on the right side approaches the outer surface of the intake air duct 31b. Even in this state, a clearance is secured between the inner surface of the lower side holder 95 and the outer surface of the intake air duct 31b. In the present embodiment, the intake air duct 31b includes lower side walls 101 and upper side walls 102. The intake air duct 31b is thus formed along the inner surface of the lower side holder 95, so that a large dimension in the vehicle width direction of the intake air duct 31b can be secured. Therefore, intake air resistance can be reduced, and a good efficiency of air intake is achieved.

In addition, a height H1 in the vertical direction of the arm portions 98 of the lower side holders 95 is equal to or more than twice a height H2 in the vertical direction of the upper side holders 96. The vertical height of the front space K2 can be thereby increased, and the vertical height of the intake air duct 31b can therefore be increased. Thus, intake air resistance can be reduced, and a good efficiency of air intake is achieved.

In the present second aspect, the bar handle 69 constituted of a single piece of pipe material extending in the vehicle width direction is fixed by the handle holders 70 at the two left and right positions which handle holders are fixed to the upward projecting portions 93 of the left and right front fork members 66. Thus, the front space K2 can be formed between the left and right handle holders 70, and the intake air duct 31b can be disposed in the front space K2.

In addition, the handle holders 70 are fixed to the front fork members 66 such that the upward projecting portions 93 are sandwiched by the tubular portions 97 of the handle holders 70 which tubular portions are provided so as to surround the upward projecting portions 93. Thus, the handle holders 70 can be fixed by a simple and compact constitution.

In addition, the handle holders 70 and the bar handle 69 couple upper ends of the left and right front fork members 66 to each other in the vehicle width direction. It is thus possible to improve rigidity of upper portions of the front fork members 66.

In addition, when the bar handle 69 is to be adjusted in height, the fixation of the handle holders 70 is released by loosening each split clamp bolt 97c (FIG. 13), the handle holders 70 are vertically moved on the upward projecting portions 93, and each split clamp bolt 97c is fastened at a desired position. The height of the bar handle 69 can thus be adjusted. Therefore, the height of the bar handle 69 can be adjusted easily without the use of another part such as a spacer for height adjustment or the like.

It is to be noted that the first embodiment represents one mode of application of the present invention, and that the present invention is not limited to the foregoing embodiments.

The first embodiment has been described supposing that the bar handle 69 is constituted of a single piece of pipe material extending in the vehicle width direction.

In addition, the first embodiment has been described supposing that the handle holders 170 and the handle holders 70 are positioned on the inside in the vehicle width direction of the left and right front fork members 66, and that the arm portions 198 and the arm portions 98 are provided so as to be along the front fork members 66.

In addition, the first embodiment has been described by taking the motorcycle 1 as an example of a saddle riding type vehicle. However, the present invention is not limited to this. For example, the present invention may be applied to saddle riding type vehicles having three wheels or more.

### Description of Reference Symbols

1 Motorcycle (saddle riding type vehicle)
2 Front wheel
14 Head pipe
31 Air cleaner case
31b Intake air duct
66 Front fork
67 Top bridge
68 Bottom bridge
69 Bar handle (steering)
170, 70 Handle holder
93 Upward projecting portion (upper portion of a front fork member)
195, 95 Lower side holder
202, 96 Upper side holder
197, 97 Tubular portion
198, 98 Arm portion
200 Fitting projecting portion
F vehicle body frame
H1 Height (height in a vertical direction of an arm portion)
H2 Height (height in the vertical direction of an upper side holder)
K, K2 Front space (space)

## Claims

1. A steering structure for a saddle riding type vehicle, the steering structure comprising:
a head pipe (14) provided to a front end portion of a vehicle body frame (F);
a top bridge (67) and a bottom bridge (68) steerably supported by the head pipe (14);
a pair of left and right front fork members (66) retained by the top bridge (67) and the bottom bridge (68), the pair of left and right front fork members (66) rotatably supporting a front wheel (2); and
a steering provided so as to move integrally with the top bridge (67);
the steering being a bar handle (69) constituted of a single piece of pipe material having a left portion and a right portion continuous with each other and extending in a vehicle width direction;
the bar handle (69) being fixed by handle holders (170, 70) at two left and right positions, and the handle holders (170, 70) being provided so as to surround respective upper portions (93) of the left and right front fork members (66) from a periphery;
wherein
the handle holders (170) include upper side holders (202) and lower side holders (195), and the lower side holders (195) surround the upper portions (93) of the front fork members (66);
**characterized in that** the lower side holders (195) have a fitting projecting portion (200) fitted to the top bridge (67) fixed to the front fork members (66).

2. The steering structure for a saddle riding type vehicle according to claim 1, wherein
the fitting projecting portion (200) is provided as a left-right pair in positions on an inside in the vehicle width direction of the front fork members (66).

3. The steering structure for a saddle riding type vehicle according to claim 1 or 2, wherein
the lower side holders (195) and the top bridge (67) are assembled, in a state of being sub-assembled and integrated with each other, to the front fork members (66) .

4. The steering structure for a saddle riding type vehicle according to any one of claims 1 to 3, wherein the left and right handle holders (170) are fixed to the respective upper portions (93) of the left and right front fork members (66) or the top bridge (67).

5. The steering structure for a saddle riding type vehicle according to any one of claims 1 to 4, wherein the handle holders (170) are positioned on an inside in the vehicle width direction of the left and right front fork members (66), and at least part of the handle holders (170) extend upward along the front fork members (66).

6. The steering structure for a saddle riding type vehicle according to any one of claims 1 to 5, wherein
an air cleaner case (31) is disposed in a space (K, K2) surrounded by the bar handle (69) and the left and right handle holders (170).

7. The steering structure for a saddle riding type vehicle according to claim 6, wherein
an intake air duct (31b) of the air cleaner case (31) is disposed in the space (K).

8. The steering structure for a saddle riding type vehicle according to claim 6 or 7, wherein the lower side holders (195) include tubular portions (197) surrounding the front fork members (66) and arm portions (198) extending upward from the tubular portions (197), and a height (H1) in a vertical direction of the arm portions (198) is equal to or more than twice a height (H2) in the vertical direction of the upper side holders (202).

## Patentansprüche

1. Eine Lenkungskonstruktion für ein Fahrzeug vom Sattelfahrtyp, wobei die Lenkungskonstruktion umfasst:
ein Kopfrohr (14), welches an einem vorderen Endabschnitt eines Fahrzeugrahmens (F) vorgesehen ist;
eine obere Brücke (67) und eine untere Brücke (68), welche lenkbar von dem Kopfrohr (14) gehalten werden;
ein Paar aus einem linken und einem rechten Vordergabelelement (66), welches durch die obere Brücke (67) und die untere Brücke (68) gehalten wird, wobei das Paar aus einem linken und einem rechten Vordergabelelement (66) drehbar ein Vorderrad (2) trägt; und
eine Lenkung, welcher so vorgesehen ist, dass er sich gemeinsam mit der oberen Brücke (67) bewegt;
wobei die Lenkung eine Lenkstange (69) ist, welche aus einem einzelnen Stück Rohrmaterial besteht, das einen linken und einen rechten Abschnitt hat, die kontinuierlich zueinander sind und sich in einer Fahrzeugbreitenrichtung erstrecken;
wobei die Lenkstange (69) durch Lenkerhalterungen (170, 70) an zwei linken und rechten Positionen fixiert ist und die Lenkerhalterungen (170, 70) so vorgesehen sind, dass sie entsprechende obere Abschnitte (93) des linken und rechten Vordergabelelements (66) an einer Außenseite umgeben;
wobei
die Lenkerhalterungen (170) einen Oberseitenhalter (202) und einen Unterseitenhalter (195) aufweisen, und
der Unterseitenhalter (195) den oberen Abschnitt (93) des Vordergabelelements (66) umgibt;
**dadurch gekennzeichnet, dass**
der Unterseitenhalter (195) einen vorstehenden Passungsabschnitt (200) hat, der an die obere Brücke (67), die an dem Vordergabelelement (66) fixiert ist, angepasst ist.

2. Lenkungskonstruktion für ein Fahrzeug vom Sattelfahrtyp gemäß Anspruch 1, wobei der vorstehende Passungsabschnitt (200) als ein Links-Rechtspaar, in einer Position auf einer Innenseite in der Fahrzeugbreitenrichtung der Vordergabelelemente (66) vorgesehen ist.

3. Lenkungskonstruktion für ein Fahrzeug vom Sattelfahrtyp gemäß Anspruch 1 oder 2, wobei die Unterseitenhalterung (195) und die obere Brücke (67), in einem Zustand, in dem sie vormontiert und miteinander verbunden sind, an die Vordergabelelemente (66) montiert werden.

4. Lenkungskonstruktion für ein Fahrzeug vom Sattelfahrtyp gemäß einem der Ansprüche 1 bis 3, wobei die linke und die rechte Lenkerhalterung (170) an einem der entsprechenden oberen Abschnitte (93) des linken und des rechten Vordergabelelements (66) oder der oberen Brücke (67) fixiert sind.

5. Lenkungskonstruktion für ein Fahrzeug vom Sattelfahrtyp gemäß irgendeinem der Ansprüche 1 bis 4, wobei die Griffhalterungen (170) an einer Innenseite des linken und rechten Vordergabelelements (66) innerhalb der Fahrzeugbreitenrichtung angeordnet sind und wenigstens ein Teil der Lenkerhalterungen (170) sich nach oben entlang der Vordergabelelemente (66) erstrecken.

6. Lenkungskonstruktion für ein Fahrzeug vom Sattelfahrtyp gemäß einem der Ansprüche 1 bis 4, wobei ein Luftfilterkasten (31) in einem Raum (K, K2) angeordnet ist, der von der Lenkstange (69) und der linken und rechten Lenkerhalterungen (170) umgeben ist.

7. Lenkungskonstruktion für ein Fahrzeug vom Sattelfahrtyp gemäß Anspruch 6, wobei ein Lufteinlasskanal (31b) des Luftfilterkastens (31) in dem Raum (K) angeordnet ist.

8. Lenkungskonstruktion für ein Fahrzeug vom Sattelfahrtyp gemäß Anspruch 6 oder 7, wobei die Unterseitenhalterung (195) einen rohrförmigen Abschnitt (197) aufweist, welcher die Vordergabelelemente (66) und Armabschnitte (198), welche sich nach oben von den rohrförmigen Abschnitten (197) erstrecken, umgibt, und eine Höhe (H1) in einer vertikalen Richtung der Armabschnitte (198) gleich oder größer als die doppelte Höhe (H2) in der vertikalen Richtung der oberen Seitenhalterungen (202) ist.

## Revendications

1. Structure de direction pour un véhicule de type à selle, la structure de direction comprenant :
un tuyau de tête (14) prévu sur une portion d'extrémité avant du cadre de corps de véhicule (F) ;
un pont supérieur (67) et un pont inférieur (68) supportés de manière dirigeable par le tuyau de tête (14) ;
une paire d'éléments de fourche avant gauche et droit (66) retenus par le pont supérieur (67) et le pont inférieur (68), la paire d'éléments de fourche avant gauche et droit (66) supportant en rotation une roue avant (2) ; et
une direction prévue de sorte à se déplacer d'un seul tenant avec le pont supérieur (67) ;
la direction étant une poignée à barre (69) constituée d'une seule pièce de matériau de tuyau présentant une portion gauche et une portion droite continues l'une avec l'autre et s'étendant dans une direction de largeur de véhicule ;
la poignée à barre (69) étant fixée par des supports de poignée (170, 70) à deux positions gauche et droite, et les supports de poignée (170, 70) étant prévus de sorte à entourer des portions supérieures respectives (93) des éléments de fourche avant gauche et droit (66) depuis une périphérie ;
dans laquelle les supports de poignée (170) incluent des supports latéraux supérieurs (202) et des supports latéraux inférieurs (195), et les supports latéraux inférieurs (195) entourent les portions supérieures (93) des éléments de fourche avant (66) ;
**caractérisée en ce que** les supports latéraux inférieurs (195) présentent une portion en saillie d'insertion (200) ajustée au pont supérieur (67) fixé aux éléments de fourche avant (66).

2. Structure de direction pour un véhicule de type à selle selon la revendication 1, dans laquelle
la portion en saillie d'insertion (200) est prévue comme une paire gauche-droite dans des positions sur une partie intérieure dans la direction de largeur de véhicule des éléments de fourche avant (66).

3. Structure de direction pour un véhicule de type à selle selon la revendication 1 ou 2, dans laquelle
les supports latéraux inférieurs (195) et le pont supérieur (67) sont assemblés, dans un état sous-assemblé et intégré les uns avec les autres, aux éléments de fourche avant (66).

4. Structure de direction pour un véhicule de type à selle selon l'une quelconque des revendications 1 à 3, dans laquelle les supports de poignée gauche et droit (170) sont fixés aux portions supérieures respectives (93) des éléments de fourche avant gauche et droit (66) ou du pont supérieur (67).

5. Structure de direction pour un véhicule de type à selle selon l'une quelconque des revendications 1 à 4, dans laquelle les supports de poignée (170) sont positionnés sur une partie intérieure dans la direction de largeur de véhicule des éléments de fourche avant gauche et droit (66), et au moins une partie des supports de poignée (170) s'étend vers le haut le long des éléments de fourche avant (66).

6. Structure de direction pour un véhicule de type à selle selon l'une quelconque des revendications 1 à 5, dans laquelle un boîtier de filtre à air (31) est disposé dans un espace (K, K2) entouré par la poignée à barre (69) et les supports de poignée gauche et droit (170) .

7. Structure de direction pour un véhicule de type à selle selon la revendication 6, dans laquelle
un conduit d'air d'admission (31b) du boîtier de filtre à air (31) est disposé dans l'espace (K).

8. Structure de direction pour un véhicule de type à selle selon la revendication 6 ou 7, dans laquelle
les supports latéraux inférieurs (195) incluent des portions tubulaires (197) entourant les éléments de fourche avant (66) et des portions de bras (198) s'étendant vers le haut depuis les portions tubulaires (197), et une hauteur (H1) dans une direction verticale des portions de bras (198) est égale ou supérieure à deux fois une hauteur (H2) dans la direction verticale des supports latéraux supérieurs (202).
